# EUROPÄISCHE PATENTSCHRIFT

(11) **EP 0 811 537 B1**
(45) Veröffentlichungstag und Bekanntmachung des Hinweises auf die Patenterteilung: **25.08.1999**
(21) Anmeldenummer: 97105889.6
(22) Anmeldetag: 10.04.1997
(51) Int. Cl.: B60S 3/06

(54) **Verfahren und Vorrichtung zum Waschen von Fahrzeugen**
Process and device for washing vehicles
Procédé et dispositif pour lavage des véhicules

(30) Priorität: 08.06.1996 DE 29610107 U
(43) Veröffentlichungstag der Anmeldung: 10.12.1997
(73) Patentinhaber: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Liebau, Gerhard, Dipl.-Ing.

(56) Entgegenhaltungen:
- EP-A- 0 247 269
- US-A- 3 939 517
- US-A- 5 361 443

## Beschreibung

Die Erfindung betrifft ein Verfahren zum Waschen von Fahrzeugen mit mindestens einer um ihre Drehachse rotierenden Waschwalze, welche eine Vielzahl einzelner Waschelemente, wie Borsten, Lappen, Streifen oder dgl. aufweist, insbesondere einer Waschbürste, wobei Waschwalze und Fahrzeugoberfläche im wesentlichen senkrecht zur Drehachse relativ zueinander bewegt werden. Die Erfindung betrifft ferner eine Vorrichtung zum Waschen von Fahrzeugen.

Bei den bisher üblichen Verfahren zum Waschen von Fahrzeugen werden die Waschwalzen einfach rotierend angetrieben, wodurch an glatten Flächen ein gutes Waschergebnis erzielt wird. In unmittelbarer Nähe von vorstehenden Teilen, wie Schrammleisten, Zierleisten, Rückspiegeln und dgl. sowie auch bei Vertiefungen, z.B. im Fensterbereich, verbleiben jedoch Zonen, in denen der Schmutz überhaupt nicht oder ungenügend entfernt wird. Diese Zonen werden als "Waschschatten" bezeichnet und sind darauf zurückzuführen, daß die Waschelemente durch die vorstehenden Teile sowie auch an Übergängen, in axialer Richtung der Waschwalze gesehen, aufgespreizt bzw. zur Seite gedrängt werden. Durch diesen Vorgang können die Waschelemente den z.B. an längs verlaufende Schrammleisten angrenzenden Bereich oder Zonen oberhalb und unterhalb des Rückspiegels nicht bestreichen.

Die US-A-3 939 517 beschreibt ein Verfahren und eine Vorrichtung gemäß dem Oberbegriff der Ansprüche 1 und 4.

Der Erfindung liegt die Aufgabe zugrunde, ein Verfahren und eine Vorrichtung zum Waschen von Fahrzeugen der eingangs erwähnten Art aufzuzeigen, mit denen ein verbessertes Waschergebnis unter weitgehender Vermeidung von "Waschschatten" erzielbar ist.

Dies wird nach der Erfindung mit den Merkmalen der Ansprüche 1 und 4 erreicht.

Die Erfindung geht also von dem Gedanken aus, der Rotationsbewegung der Waschwalze eine kurzhubige Bewegung geringer Hubfrequenz in axialer Richtung der Waschwalze zu überlagern. Überraschenderweise kann hierdurch das Waschergebnis stark verbessert werden. Dabei werden die Nachbarbereiche von Zier- und Schrammleisten, eingezogene Teile im Fensterbereich, Zonen über und unter dem Rückspiegel, an Regenrinnen und sonstige Vertiefungen angrenzende Bereiche, sowie auch z.B. die oberen und unteren Flächen von Stoßstangen, einwandfrei gereinigt. Durch die hin- und hergehende Bewegung der Waschwalze wird das Aufspreizen der Waschelemente jeweils an einer Seite des vorspringenden Teiles verringert bzw. beseitigt, so daß dann die Waschelemente auch Zonen erreichen können, die in umittelbarer Nachbarschaft von vorspringenden Teilen oder Absätzen liegen.

Vorteilhafte Ausgestaltungen der Erfindung sind in den Unteransprüchen gekennzeichnet.

Die Erfindung ist in folgendem, anhand von mehreren in der Zeichnung dargestellten Ausführungsbeispielen näher erläutert. Es zeigen:
- Figur 1: die Stirnansicht eines Waschportals mit einer ersten Ausführungsform der erfindungsgemäßen Vorrichtung,
- Figur 2: einen horizontalen Teilquerschnitt dieser Vorrichtung im Bereich eines Laufwagens nach der Linie II-II der Figur 3,
- Figur 3: einen vertikalen Teilquerschnitt und eine Teilseitenansicht nach der Linie III-III der Figur 2,
- Figur 4: eine Teilseitenansicht einer zweiten Ausführungsform im Bereich des Laufwagens,
- Figur 5: eine Stirnansicht des Waschportals mit einer dritten Ausführungsform der erfindungsgemäßen Vorrichtung,
- Figur 6: eine Teilstirnansicht im Bereich VI der Figur 5,
- Figur 7: einen horizontalen Teilschnitt nach der Linie VII-VII der Figur 6,
- Figur 8: die Stirnansicht des Waschportals mit einer vierten Ausführungsform der erfindungsgemäßen Vorrichtung,
- Figur 9: einen vertikalen Teilschnitt nach der Linie IX-IX der Figur 8,
- Figur 10: die Stirnansicht eines Waschportals mit einer fünften Ausführungsform der erfindungsgemäßen Vorrichtung,
- Figur 11: die Stirnansicht des Waschportals mit einer sechsten Ausführungsform der erfindungsgemäßen Vorrichtung,
- Figur 12: einen vertikalen Teilquerschnitt nach der Linie XII-XII der Figur 11,
- Figur 13: die Stirnansicht des Waschportals mit einer um eine horizontale Achse rotierenden Waschwalze,
- Figur 14: die Stirnansicht einer weiteren Ausführungsform einer um eine horizontalen Achse rotierenden Waschwalze.

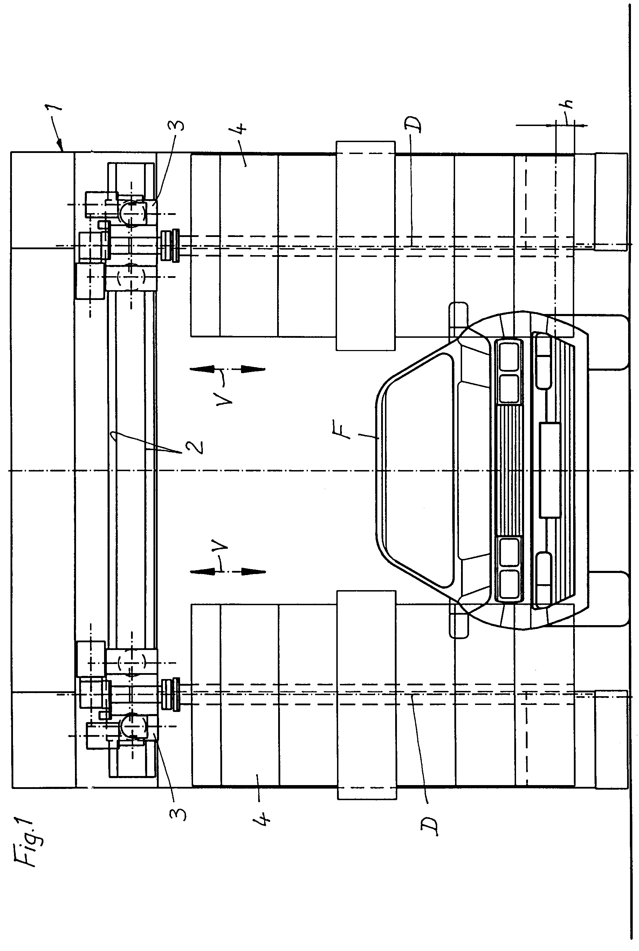

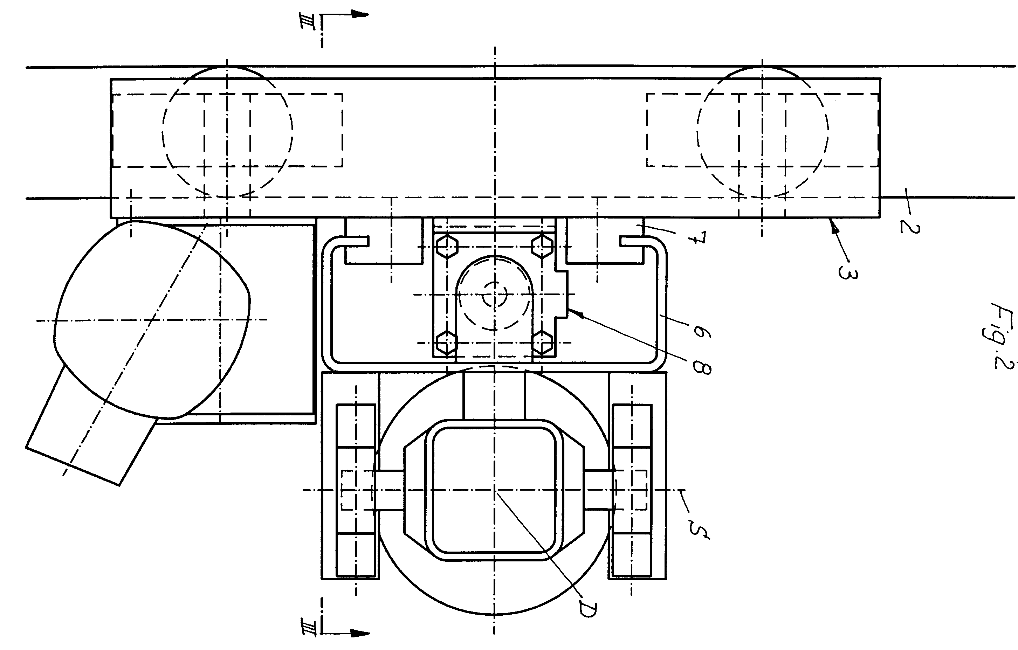

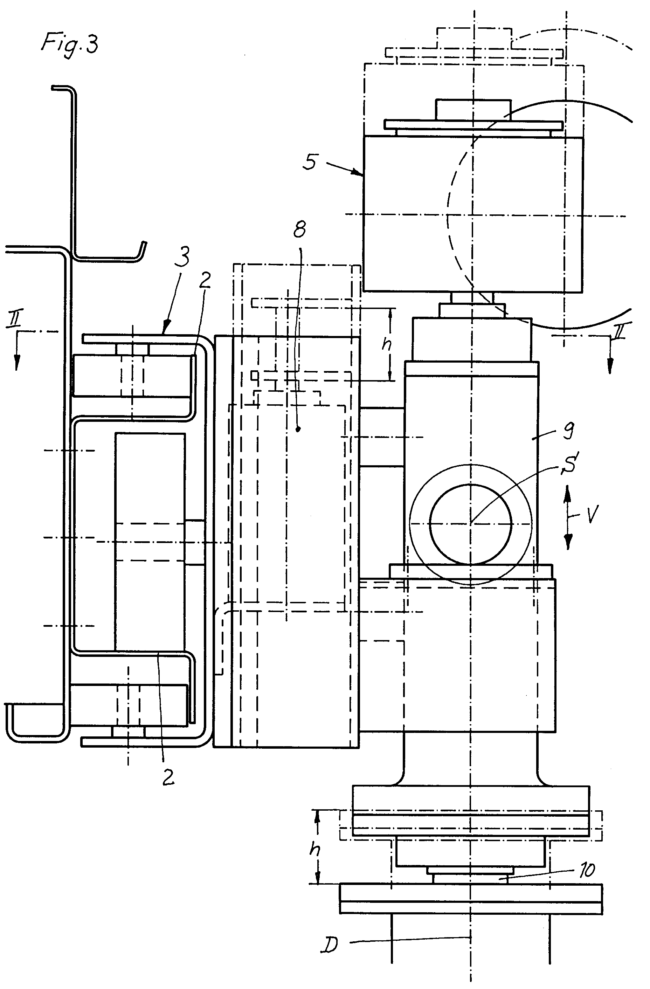

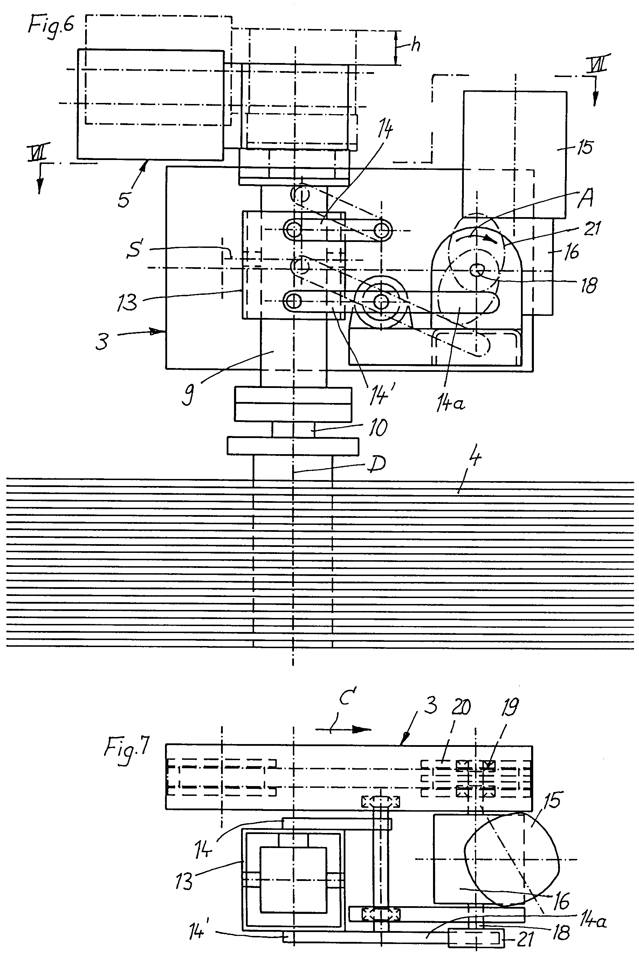

In den Zeichnungen ist mit 1 jeweils ein Waschportal bezeichnet, welches relativ zum Fahrzeug F in dessen Längsrichtung beweglich ist. Dies bedeutet, daß entweder, wie bei Portalwaschanlagen, das Fahrzeug während des Waschvorganges ruht und das Portal 1 (senkrecht zur Zeichenebene) hin- und herbewegt wird, oder daß bei Waschstraßen das Portal ruht und das Fahrzeug durch die Waschstraße hindurchgeschleppt wird. Das Portal 1 weist horizontale Laufschienen 2 auf, an denen zwei Laufwagen 3 horizontal verfahrbar sind. Da diese beiden Laufwagen gleichartig ausgestaltet sind, wird im folgenden nur einer derselben beschrieben. Jeder der Laufwagen 3 trägt eine Waschwalze 4, die um eine horizontale Drehachse D drehantreibbar ist. Zum Antrieb der Waschwalze 4 dient ein aus Motor und Getriebe bestehendes Antriebsaggregat 5. Die Waschwalze 4 weist eine Vielzahl einzelner Waschelemente, wie z.B. Borsten, Textil-Lappen, Textil- oder Schaumstoffstreifen, Fellstreifen oder dgl. auf. Gemäß der Erfindung sollen die Waschwalzen 4 in Richtung V ihrer Drehachsen D, d.h. bei den in den Figuren 1 - 12 dargestellten Ausführungsbeispielen, vertikal hin- und herbeweglich sein.

Der Hub h dieser Hin- und Herbewegung der Waschwalze 4 kann bis zu 100 mm betragen. Vorteilhaft ist ein Hub von etwa 10 - 50 mm, vorzugsweise etwa 25 mm.

Die Hubfrequenz der Waschwalze 4 bzw. ihrer Halterung sollte zwischen 0,1 - 1,0 Hz, vorzugsweise etwa 0,35 Hz, betragen.

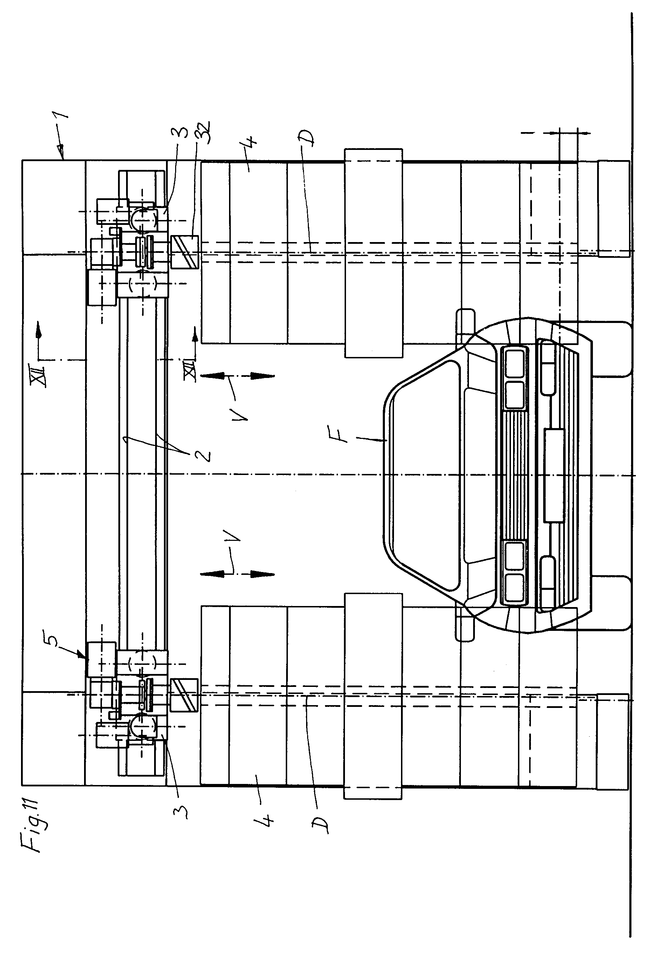

Die Hin- und Herbewegung der Waschwalze 4 kann entweder dadurch erreicht werden, daß die Halterung, welche die Waschwalze 4 trägt, hin- und herbewegt wird, wie es bei den in Figur 1 - 10 dargestellten Ausführungsbeispielen der Fall ist, oder daß nur die Waschwalze selbst gegenüber ihrem Antriebsaggregat hin- und hergeschoben wird, wie es bei den in Figur 11 - 14 dargestellten Ausführungsbeispielen der Fall ist. Wenn nur die Waschwalze 4 hin- und herbewegt wird, hat dies den Vorteil, daß geringere Massen hin- und herbewegt werden müssen.

Bei dem in Figur 1 - 3 dargestellten Ausführungsbeispiel ist die Halterung ein Hubschlitten 6, der an Vertikalführungen 7 des Laufwagens 3 höhenverschiebbar gelagert ist. Zur Erzeugung der in Richtung V, d.h. vertikal verlaufenden Hin- und Herbewegung, dient ein Pneumatik- oder Hydraulikzylinder 8. Es kann jedoch auch jeder andere bekannte Antriebsmotor verwendet werden. Das Lagergehäuse 9 der Antriebswelle 10, welche die Waschwalze 4 trägt, ist um eine parallel zu den Laufschienen 2 verlaufende, horizontale Achse S schwenkbar. Mittels des als Antriebsvorrichtung vorgesehenen Pneumatik- oder Hydraulikzylinders 8 kann der Hubschlitten 6 in Richtung V auf- und abbewegt werden, wodurch der Waschwalze ein Hub h in Richtung ihrer Drehachse D mit der gewünschten Hubfrequenz erteilt wird.

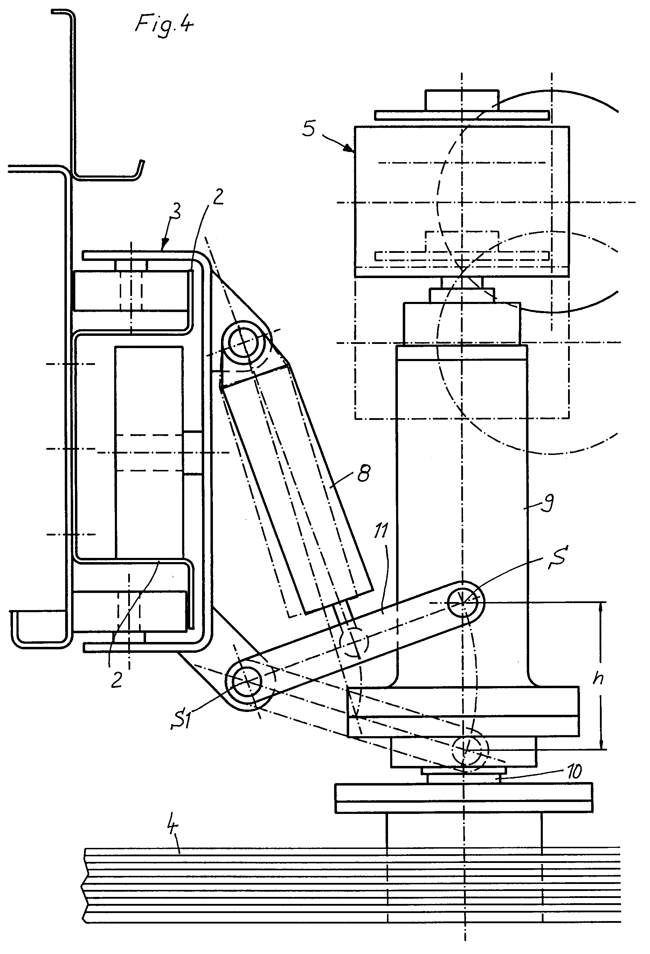

Bei dem in Figur 4 dargestellten Ausführungsbeispiel und den weiteren Ausführungsbeispielen sind Teile gleicher Funktion mit den gleichen Bezugszeichen bezeichnet und die vorstehende Beschreibung dieser Teile gleicher Funktion trifft sinngemäß auch auf die weiteren Ausführungsbeispiele zu. Bei dem in Figur 4 dargestellten Ausführungsbeispiel ist die Halterung eine Traggabel 11, die um eine parallel zu den Laufschienen 2 verlaufende horizontale Achse S1 schwenkbar mit dem Laufwagen 3 verbunden ist. Das Lagergehäuse 9 ist über die Schwenkachse S mit der Traggabel 11 verbunden. Als Antriebsmotor dient wiederum ein Pneumatik- oder Hydraulikzylinder 8, welcher der Traggabel 11 den Hub h erteilt. Die Waschwalze 4 wird hierdurch mit entsprechendem Hub auf- und abbewegt.

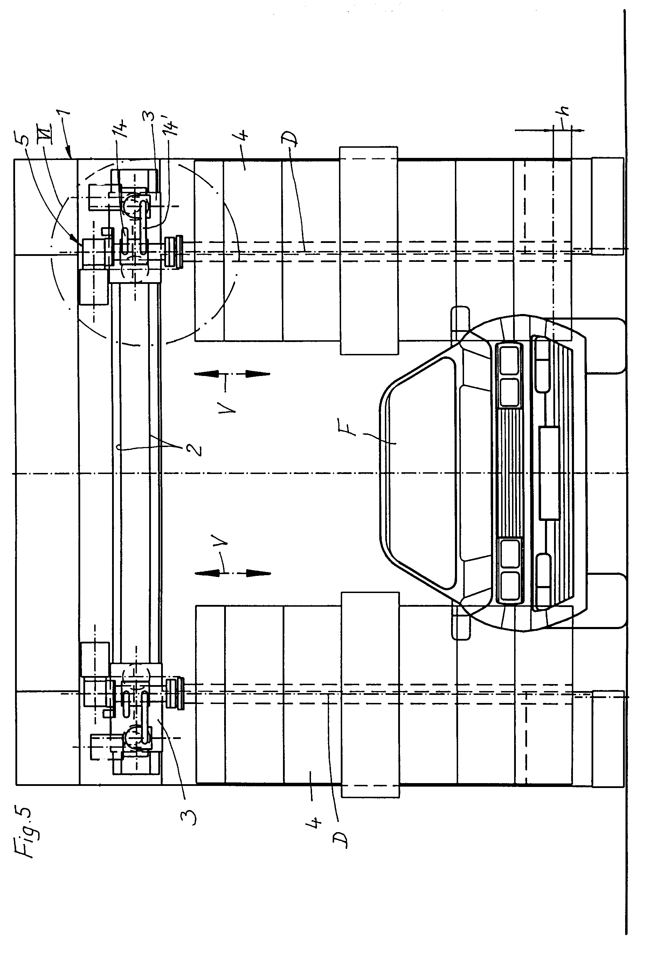

Bei den in Figur 5 - 7 dargestellten Ausführungsbeispiel ist eine Halterung 13 über mehrere Parallelogrammlenker 14, 14' mit dem Laufwagen 3 höhenbeweglich verbunden. Ein aus einem Stellmotor 15 und einem Getriebe 16 bestehender Stellantrieb weist eine Abtriebswelle 18 auf, deren eines Ende über einen Freilauf 19 ein Laufrad 20 des Laufwagens 3 antreibt. Wenn die Abtriebswelle 18 in Richtung A angetrieben wird, wirkt der Freilauf sperrend, wodurch der Laufwagen 3 mittels des nunmehr angetriebenen Laufrades 20 nach außen, d.h. zur Seite des Portals hin bewegt wird. Zur Mitte des Portals hin ist der Laufwagen hingegen durch ein an einem nicht dargestellten Seilzug angreifendes Gewicht belastet. Außerdem ist mit der Abtriebswelle 18 ein Steuernocken 21 fest verbunden, der auf eine Verlängerung 14a des Parallelogrammlenkers 14' einwirkt. Der Stellmotor 15 wird von einer geeigneten, bekannten Steuereinrichtung gesteuert, die in Abhängigkeit von dem Anpreßdruck der Waschwalze 4 an das zu waschende Fahrzeug F den Stellmotor 15 in die eine oder die andere Drehrichtung einschaltet. Die Steuereinrichtung kann einen Strommesser, einen Leistungsmesser, einen Drehzahlmesser, einen Neigungsschalter oder dgl. enthalten. Normalerweise ist der Stellmotor 15 in einer ersten Drehrichtung eingeschaltet, welche die Abtriebswelle 18 entgegen der Pfeilrichtung A antreibt. In dieser Drehrichtung ist die Antriebsverbindung zum Laufrad 20 durch den Freilauf 19 unterbrochen. Der fest mit der Abtriebswelle 18 verbundene Steuernocken 21 versetzt somit die Halterung ständig in eine Auf- und Abbewegung mit dem Hub h. Diese Bewegung wird von der Halterung 13 über die Schwenkwelle S auf das Lagergehäuse 9 und von diesem auf die Waschwalze 4 übertragen. Überschreitet der Anpreßdruck der Waschwalze 4 an die Fahrzeugoberfläche einen vorbestimmten Wert, dann wird über die nicht dargestellte Steuereinrichtung die Drehrichtung des Stellmotors 15 umgekehrt, wodurch die Abtriebswelle 18 in der Drehrichtung A angetrieben wird. Bei dieser Drehrichtung wirkt der Freilauf 19 sperrend und das nunmehr angetriebene Laufrad 20 bewegt den Laufwagen 3 in Richtung C nach außen. Da jedoch der Steuernocken 21 fest mit der Abtriebswelle 18 verbunden ist, wird auch bei dieser Drehrichtung A der Halterung 13 eine auf- und abgehende Bewegung erteilt. Diese Ausgestaltung der Antriebsvorrichtung hat den Vorteil, daß zur Erzeugung der Hin- und Herbewegung der Waschwalze kein separater Antriebsmotor erforderlich ist. Der Stellmotor 15 dient sowohl als Antriebsmotor für die Hin- und Herbewegung bzw. Auf- und Abbewegung der Waschwalze als auch zum Antrieb des Laufwagens 3 in der Bewegungsrichtung C.

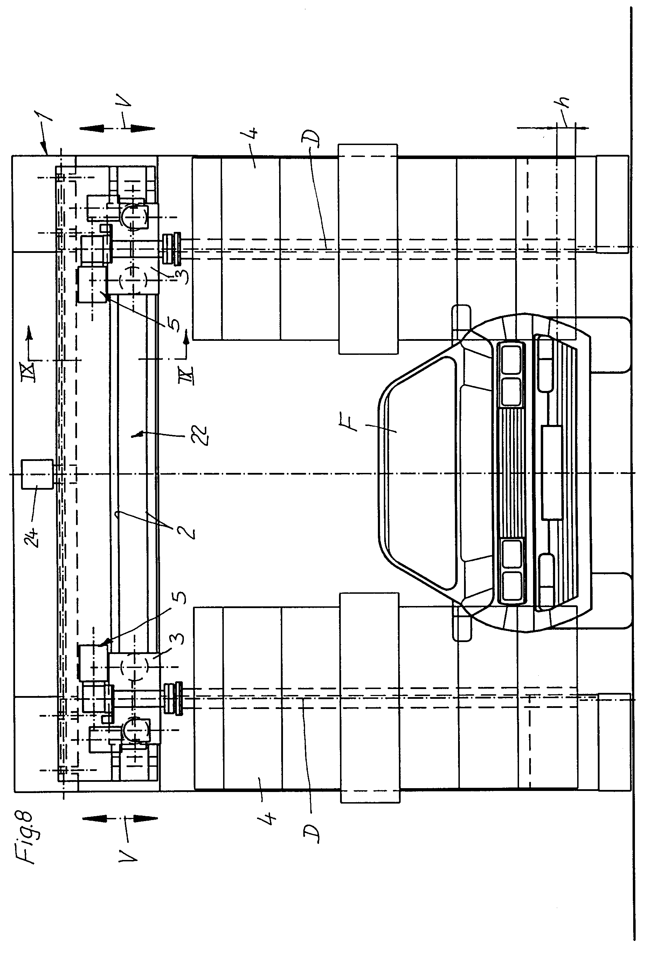

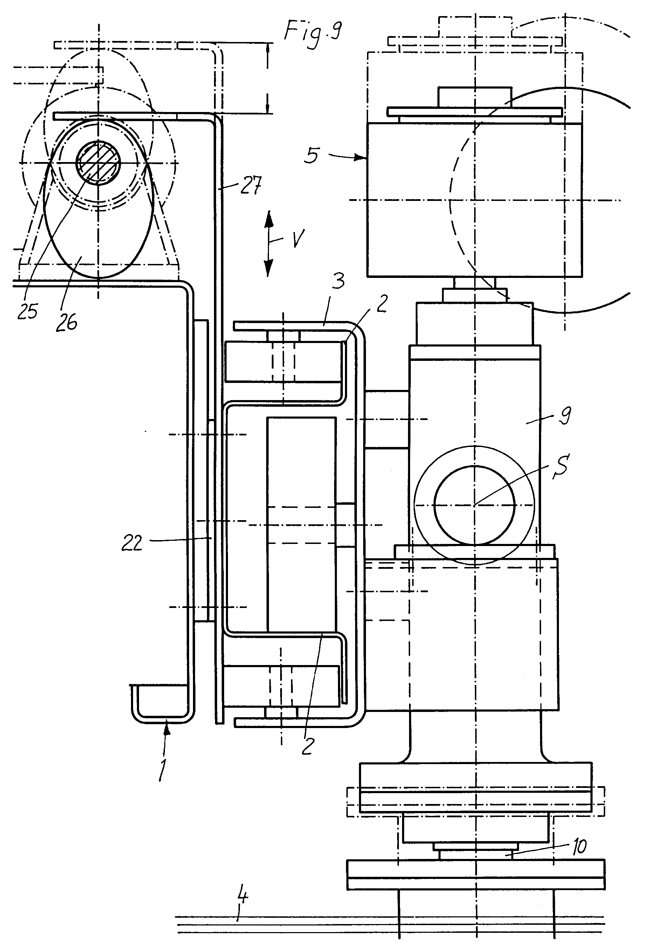

Bei dem in den Figuren 8 und 9 dargestellten Ausführungsbeispiel sind die Laufschienen 2 des Laufwagens 3 an einem Laufschienenträger 22 angeordnet. Dieser Laufschienenträger 22 ist mittels Vertikalführungen 23 an dem Portal 1 höhenbeweglich gelagert. Ein Antriebsmotor 24 treibt eine Verbindungswelle 25, an deren beiden Enden jeweils ein Steuernocken 26 angeordnet ist. Jeder dieser Steuernocken wirkt auf einen mit dem Laufschienenträger 22 verbundenen Arm 27 ein. Über die Antriebsvorrichtung 24 - 27 wird dem Laufschienenträger 22 ein Hub h in Richtung V erteilt, wodurch auch die Waschwalze 4 im gleichen Maße in Richtung V auf- und abbewegt wird.

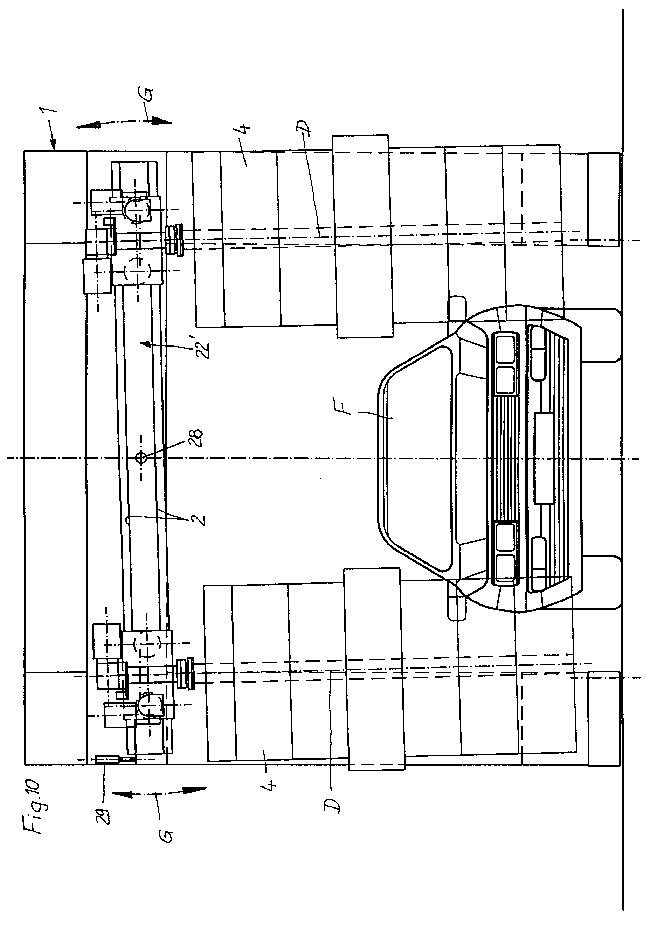

Bei dem in Figur 10 dargestellten Ausführungsbeispiel sind die Laufschienen 2 an einem Laufschienenträger 22' angeordnet, der in seinem mittleren Bereich um eine quer zu seiner Längsrichtung angeordnete, horizontale Schwenkachse 28 schwenkbar ist. Mittels eines geeigneten Antriebsmotors 29 wird der Laufschienenträger 22', wie mit den Pfeilen G angedeutet, auf- und abgeschwenkt, wodurch den Waschwalzen 4 eine im wesentlichen vertikal verlaufende Auf- und Abbewegung in Richtung ihrer Drehachsen erteilt wird.

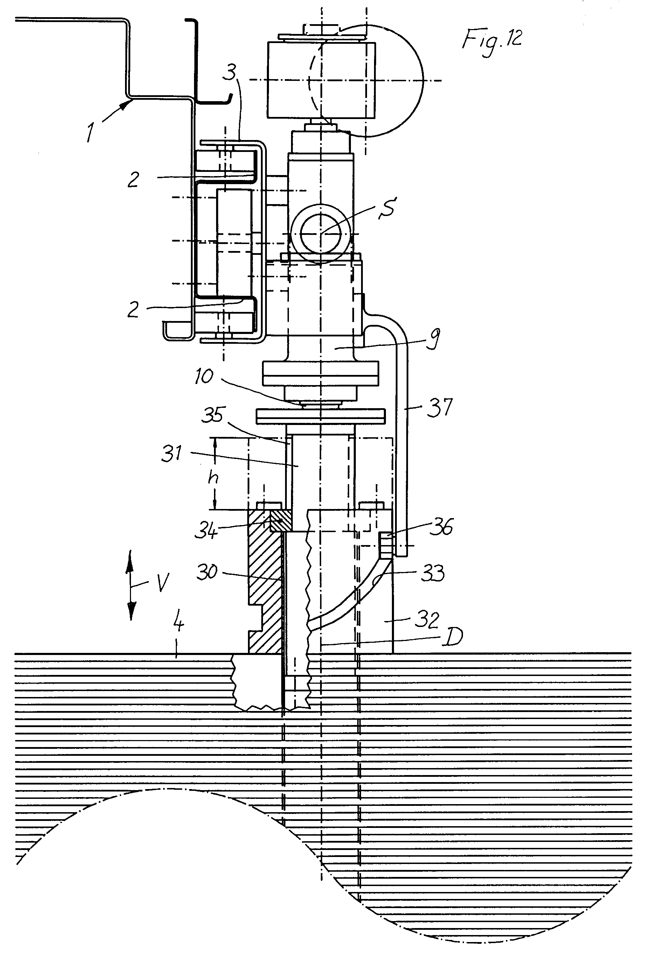

Bei dem in Figur 11 und 12 dargestellten Ausführungsbeispiel sind die Laufschienen 2 fest mit dem Portal 1 verbunden und die Laufwagen 3 an den Laufschienen 2 verfahrbar. Das Lagergehäuse 9 ist über die Schwenkachse S am Laufwagen 3 schwenkbar gelagert. Bei diesem Ausführungsbeispiel weist die Waschwalze 4 ein zentrales Tragrohr 30 auf, welches auf einer drehfest mit dem Antriebsaggregat 5 verbundenen Antriebswelle 31 axial verschiebbar ist. Mit dem oberen Ende des Tragrohres 30 ist eine Nutentrommel 32 fest verbunden, welche eine in Umfangsrichtung wellenförmig verlaufende Steuernut 33 aufweist. Über einen Gleitstein 34, der in eine axiale Nut 35 der Antriebswelle 31 eingreift, ist das Tragrohr 30 drehfest, jedoch axial verschiebbar mit der Antriebswelle 31 verbunden. Eine Rolle 36, die am unteren Ende der Tragstange 37 angeordnet ist, greift in die Steuernut 33 ein. Die Tragstange 37 ist fest mit dem Lagergehäuse 9 verbunden. Die Rolle 36 kann auch durch einen Nutenstein ersetzt sein. Wenn die Antriebswelle 31 über das Antriebsaggregat 5 drehend angetrieben wird, dann dreht sich die Nutentrommel 32 relativ zu der stationären Rolle 36. Die wellenförmig verlaufende Steuernut 33 bewirkt eine Auf- und Abbewegung der Nutentrommel und damit des fest mit ihr verbundenen Tragrohres 30 der Waschwalze 4.

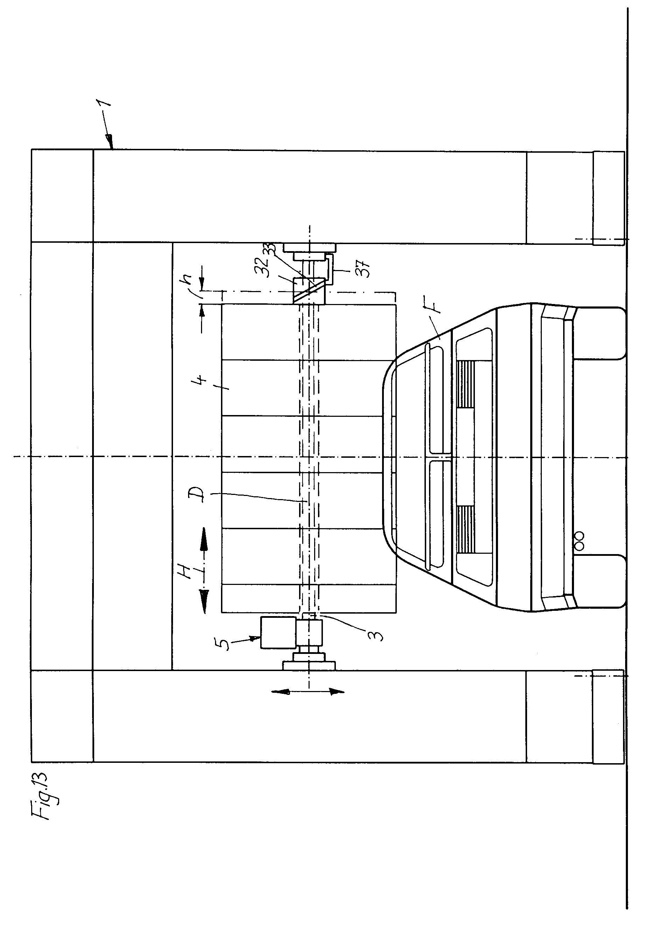

Bei dem in Figur 13 dargestellten Ausführungsbeispiel ist die Drehachse D der Waschwalze 4 horizontal angeordnet. Die Waschwalze 4 ist in ähnlicher Weise wie bei dem in Figur 11 und 12 dargestellten Ausführungsbeispiel mit einem zentralen Tragrohr 30 versehen, welches gegenüber der nicht näher dargestellten Antriebswelle, die von dem Antriebsaggregat 5 angetrieben wird, axial verschiebbar, jedoch drehfest verbunden ist. An dem einen Ende des Tragrohres 30 ist wiederum eine Nutentrommel 32 befestigt, die eine in Umfangsrichtung wellenförmig verlaufende Steuernut 33 aufweist. Die Hin- und Herbewegung des Tragrohres 30 und damit auch der Waschwalze 4 wird wie bei dem vorhergehenden Ausführungsbeispiel durch den Eingriff einer an einem Tragarm 37 angeordneten Rolle oder dgl. bewirkt.

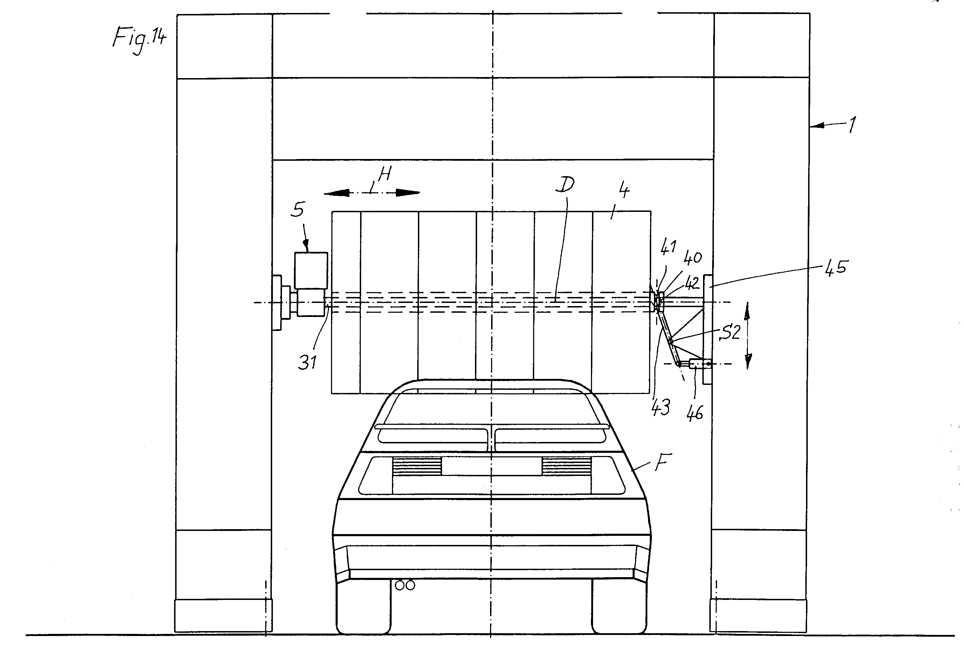

Bei dem in Figur 14 dargestellten Ausführungsbeispiel ist das auf der Antriebswelle verschiebbare Tragrohr mit einer Büchse 40 verbunden, die eine umlaufende Steuernut 41 aufweist. In diese Steuernut 41 greift eine Rolle 42 ein, die am freien Ende eines schwenkbaren Steuerarmes 43 angeordnet ist. Der Steuerarm 43 ist um die Achse S2 schwenkbar mit dem im Portal 1 höhenverschiebbaren Hubschlitten 45 verbunden. Ein Antriebsmotor 46 ist ebenfalls an diesem Hubschlitten 45 angeordnet und versetzt den Steuerarm 43 in eine Schwenkbewegung, die eine Hin- und Herbewegung der Waschwalze 4 in Richtung H ihrer Drehachse versetzt.

## Patentansprüche

1. Verfahren zum Waschen von Fahrzeugen mit mindestens einer um ihre Drehachse (D) rotierenden Waschwalze (4), welche eine Vielzahl einzelner Waschelemente, wie Borsten, Lappen, Streifen oder dgl. aufweist, insbesondere einer Waschbürste, wobei Waschwalze (4) und Fahrzeugoberfläche im wesentlichen senkrecht zur Drehachse (D) relativ zueinander bewegt werden und die Waschwalze (4) während ihrer Rotation ständig in Richtung ihrer Drehachse (D) hin-und herbewegt wird, **dadurch gekennzeichnet**, daß die Hin- und Herbewegung mit einem Hub von bis zu 100 mm und mit einer Hubfrequenz von 0,1 bis 1,0 Hz erfolgt.

2. Verfahren nach Anspruch 1, **dadurch gekennzeichnet,** daß der Hub 10 - 50 mm, vorzugsweise etwa 25 mm, beträgt.

3. Verfahren nach Anspruch 1, **dadurch gekennzeichnet,** daß die Hubfrequenz etwa 0,35 Hz beträgt.

4. Vorrichtung zum Waschen von Fahrzeugen mit mindestens einer, von einer Halterung (6, 11, 14, 22, 22') getragen, um ihre Drehachse (D) drehtreibbar gelagerten Waschwalze (4), welche eine Vielzahl einzelner Waschelemente, wie Borsten, Lappen, Streifen oder dgl. aufweist, insbesondere einer Waschbürste, wobei Waschwalze (4) und Fahrzeugoberfläche im wesentlichen senkrecht zur Drehachse (D) relativ zueinander bewegbar sind, und die Halterung (6, 11, 14, 22, 22') und/oder die Waschwalze (4) mittels einer Antriebsvorrichtung (8; 15, 16, 21; 24 - 26; 29; 32, 33, 36, 37; 40 - 46) im wesentlichen in Richtung (V, H) der Drehachse (D) der Waschwalze (4) hin- und herbeweglich ist, **dadurch gekennzeichnet**, daß die Antriebsvorrichtung einem Hub von bis zu 100 mm mit einer Hubfrequenz von 0,1 bis 1,0 Hz erzeugt.

5. Vorrichtung nach Anspruch 4, **dadurch gekennzeichnet, daß der Hub 10 - 50 mm, vorzugsweise etwa 25 mm beträgt.**

6. Vorrichtung nach Anspruch 4, **dadurch gekennzeichnet,** daß die Hubfrequenz etwa 0,35 Hz beträgt.

7. Vorrichtung nach einem der Ansprüche 4 bis 6, **dadurch kennzeichnet,** daß die Waschwalze(4)mit vertikaler Drehachse (D) an einer Halterung (6, 11, 14) gelagert ist, die höhenbeweglich an einem an horizontalen Laufschienen (2) verfahrbaren Laufwagen (3) angeordnet ist. (Fig. 1 - 3; 4; 5 - 7)

8. Vorrichtung nach Anspruch 7, **dadurch gekennzeichnet,** daß die Halterung ein Hubschlitten (6) ist, der an Vertikalführungen (7) des Laufwagens (3) höhenverschiebbar ist. (Fig. 1 - 3)

9. Vorrichtung nach Anspruch 7, **dadurch gekennzeichnet,** daß die Halterung eine Traggabel (11) ist, welche um eine horizontale und parallel zur Bewegungsrichtung des Laufwagens (3) angeordnete Schwenkachse (S1) schwenkbar mit diesem verbunden ist. (Fig. 4)

10. Vorrichtung nach Anspruch 7, **dadurch gekennzeichnet,** daß die Halterung über mehrere Parallelogrammlenker (14, 14') mit dem Laufwagen (3) höhenbeweglich verbunden ist. (Fig. 5 - 7)

11. Vorrichtung nach einem der Ansprüche 7 - 10, **dadurch gekennzeichnet,** daß die Antriebsvorrichtung für die Halterung durch den Stellantrieb (15, 16) des Laufwagens (3) gebildet wird, wobei die Antriebswelle (18) des Stellantriebes (15, 16) über einen Freilauf (19) in einer Drehrichtung (A) mit einem Laufrad (20) des Laufwagens (3) verbunden ist und einen Steuernocken (21) trägt, der in beiden Drehrichtungen auf einen (14') der Parallelogrammlenker einwirkt. (Fig. 6, 7)

12. Vorrichtung nach einem der Ansprüche 4 bis 6, **dadurch gekennzeichnet,** daß mindestens eine Waschwalze (4) mit vertikaler Drehachse (D) an einem Laufwagen (3) gelagert ist, der an horizontalen Laufschienen (2) verfahrbar ist, und daß die Laufschienen (2) an einem höhenbeweglichen, durch die Antriebsvorrichtung(en) (25, 26; 29) auf- und abbeweglichen Laufschienenträger (22; 22') angeordnet sind. (Fig. 8, 9; 10)

13. Vorrichtung nach Anspruch 12, **dadurch gekennzeichnet,** daß der Laufschienenträger (22) an Vertikalführungen (23) eines Portals (1) auf- und abbeweglich ist. (Fig. 8, 9)

14. Vorrichtung nach Anspruch 12, **dadurch gekennzeichnet,** daß der Laufschienentrager (22') um eine in seinem mittleren Bereich quer zu seiner Längsrichtung angeordnete, horizontale Schwenkachse (28) wippbar gelagert ist und daß zu beiden Seiten der Schwenkachse je ein Laufwagen (3) vorgesehen ist. (Fig. 10)

15. Vorrichtung nach einem der Ansprüche 4 bis 6, **dadurch gekennzeichnet,** daß die Waschwalze (4) mit ihrem Antriebsaggregat drehfest und axial verschiebbar verbunden ist. (Fig. 11- 14)

16. Vorrichtung nach Anspruch 15, **dadurch gekennzeichnet,** daß die Waschwalze (4) ein zentrales Tragrohr (30) aufweist, welches auf einer drehfest mit dem Antriebsaggregat (5) verbundenen Antriebswelle (31) axial verschiebbar und drehfest mit dieser verbunden ist.

17. Vorrichtung nach Anspruch 16, **dadurch gekennzeichnet,** daß an einem Ende des Tragrohres (30) eine Nutentrommel (32) mit einer in Umfangsrichtung wellenförmig verlaufenden Steuernut (33) angeordnet ist, in welche eine über eine Tragstange (37) mit einem ruhenden Teil (9) des Antriebsaggregates (5) verbundene Rolle (36) oder ein Nutenstein so eingreift, daß durch die Drehung der Antriebswelle (31) die Nutentrommel (32) und das mit ihr verbundene Tragrohr (30) in axiale Hin- und Herbewegung versetzt werden. (Fig. 12)

18. Vorrichtung nach Anspruch 16, **dadurch gekennzeichnet,** daß an einem Ende des Tragrohres (30) eine Büchse (40) mit einer umlaufenden Steuernut (41) angeordnet ist, in welche eine am freien Ende eines schwenkbaren Steuerarmes (43) angeordnete Rolle (42) oder ein Nutenstein eingreift, und daß zum Hin- und Herschwenken des Steuerarmes ein Antriebsmotor (46) vorgesehen ist.

## Claims

1. Method of washing vehicles with at least one wash roller (4) rotating about is axis of rotation (D), which has a plurality of individual wash members such as bristles, rags, strips or the like, particularly of a wash brush, the wash roller and the verhicle surface being moved relative to one another substantially perpendicularly to the axis of rotation (D), and the wash roller (4) being moved continuously during its rotation to and fro in the direction of its axis of rotation (D), characterized in that the to and fro movement is effected with a stroke of up to 100 mm and with a stroke frequency of 0.1 to 1.0 Hz.

2. Method according to claim 1, characterised in that the stroke comes to 10 - 50 mm, preferably about 25 mm.

3. Method according to claim 1, characterised in that the stroke frequency comes to about 0.35 Hz.

4. Device for washing vehicles with at least one wash roller carried by a holding system (6, 11, 14, 22, 22') and mounted so as to be drivable in a rotary direction about is axis of rotation (D), which has a plurality of individual wash members, such as bristles, rags, strips or the like, particularly of a wash brush, wash roller and vehicle surface being moveable relative to one another substantially perpendicularly to the axis of rotation (D), and the holding system (6, 11, 14, 22, 22') and/or the wash roller (4) are moveable to and fro substantially in the direction (V, H) of the axis of rotation (D) of the wash roller (4) by means of a drive device(8; 15, 16, 21; 24-26; 29; 32, 33, 36, 37; 40-46), characterized in that the drive device generates a stroke of up to 100 mm with a stroke frequency of 0.1 to 1.0 Hz.

5. Device according to claim 4, characterised in that the stroke comes to 10 - 50 mm, preferably about 25 mm.

6. Method according to claim 4, characterised in that the stroke frequency comes to about 0.35 Hz.

7. Device according to one of claims 4 to 6, characterised in that the wash roller (4) is mounted with a vertical axis of rotation (D) on a holding system (6, 11, 14), which is disposed to be movable vertically on a runner (3) movable on horizontal runner rails (2). (Figures 1 - 3; 4; 5 - 7).

8. Device according to claim 7, characterised in that the holding system is a lifting slide (6) which is vertically movable on vertical guides (7) of the runner (3) . (Figures 1 - 3).

9. Device according to claim 7, characterised in that the holding system is a support fork (11) which is connected to the runner (3) to pivot about a pivoting axis (S1) disposed parallel to the direction of movement of the runner (3). (Figure 4).

10. Device according to claim 7, characterised in that the holding system is vertically movably connected via a plurality of parallelogram guides (14, 14') to the runner (3). (Figures 5 - 7).

11. Device according to one of claims 7 to 10, characterised in that the drive device for the holding system is formed by the actuating drive (15, 16) of the runner (3), the drive shaft (18) of the actuating drive (15, 16) being connected by a free wheel (19) in a direction of rotation (A) to a runner wheel (20) of the runner (3) and carries a control cam (21) which acts in both directions of rotation on one (14') of the parallelogram guides. (Figures 6, 7).

12. Device according to one of claims 4 to 6, characterised in that at least one wash roller (4) is mounted with a vertical axis of rotation (D) on a runner (3) which is movable on horizontal runner rails (2), and in that the runner rails (2) are disposed on a vertically movable runner rail carrier (22; 22') which is movable up and down by means of the drive device(s) (25, 26; 29). (Figures 8, 9; 10)

13. Device according to claim 12, characterised in that the runner rail carrier (22) is movable up and down on vertical guides (23) of a gantry (1). (Figures 8, 9).

14. Device according to claim 12, characterised in that runner rail carrier (22') is mounted in rocker fashion about a horizontal pivotal axis (28) disposed in its central area transversely to its longitudinal direction, and in that a respective runner (3) is provided on both sides of the pivotal axis. (Figure 10).

15. Device according to one of claims 4 to 6, characterised in that the wash roller (4) is non-rotatably and axially movably connected to its drive unit. (Figures 11 - 14).

16. Device according to claim 15, characterised in that the wash roller (4) has a central support pipe (30), which is axially displaceable on a drive shaft (31) non-rotatably connected to the drive unit (5), and is non-rotatably connected therewith.

17. Device according to claim 16, characterised in that on one end of the support pipe (30) there is disposed a slotted drum (32) with a control groove (33) extending in the circumferential direction in a corrugated configuration, in which there engages a roller (36) connected by a support rod (37) to a stationary portion (9) of the drive unit (5) or a slotted block, in such a way that, due to the rotation of the drive shaft (31), the slotted drum (32) and the support pipe (30) connected therewith have an axial to-and-fro movement imparted thereto. (Figure 12).

18. Device according to claim 16, characterised in that there is disposed on one end of the support pipe (30) a bush (40) with a surrounding control groove (41), into which a roller (42) disposed at the free end of a pivotal control arm (43) or a slotted block engages, and in that a drive motor (46) is provided for pivoting the control arm to and fro.

## Revendications

1. Procédé de lavage de véhicules avec au moins un rouleau de lavage (4), qui est rotatif autour de son axe de rotation (D) et qui présente une pluralité d'éléments individuels de lavage tels que des poils, des pièces de tissu, des bandes ou analogues, notamment une brosse de lavage, le rouleau de lavage (4) et la surface du véhicule étant déplacés l'un par rapport à l'autre essentiellement perpendiculairement à l'axe de rotation (D), et le rouleau de lavage (4) étant, pendant sa rotation, constamment déplacé en va-et-vient en direction de son axe de rotation (D), **caractérisé** en ce que le mouvement de va-et-vient s'effectue avec une course pouvant atteindre 100 mm et une fréquence de course de 0,1 à 1,0 Hz.

2. Procédé selon la revendication 1, **caractérisé** en ce que la course est comprise entre 10 et 50 mm, et de préférence approximativement égale à 25 mm.

3. Procédé selon la revendication 1, **caractérisé** en ce que la fréquence de course est approximativement égale à 0,35 Hz.

4. Dispositif de lavage de véhicules, comprenant au moins un rouleau de lavage (4), porté par un support (6, 11, 14, 22, 22') et monté en pouvant être entraîné en rotation autour de son axe de rotation (D), rouleau qui présente une pluralité d'éléments individuels de lavage tels que des poils, des pièces de tissu, des bandes ou analogues, notamment une brosse de lavage, le rouleau de lavage (4) et la surface du véhicule étant déplacés l'un par rapport à l'autre essentiellement perpendiculairement à l'axe de rotation (D), et le support (6, 11, 14, 22 22') et/ou le rouleau de lavage (4) étant, au moyen d'un dispositif d'entraînement (8 ; 15, 16, 21 ; 24 à 26 ; 29 ; 32, 33, 36, 37 ; 40 à 46), mobiles en va-et-vient essentiellement dans la direction (V, H) de l'axe de rotation (D) du rouleau de lavage (4), **caractérisé** en ce que le dispositif d'entraînement produit une course pouvant atteindre 100 mm et une fréquence de course de 0,1 à 1,0 Hz.

5. Dispositif selon la revendication 4, **caractérisé** en ce que la course est comprise entre 10 et 50 mm, et de préférence approximativement égale à 25 mm.

6. Dispositif selon la revendication 4, **caractérisé** en ce que la fréquence de course est approximativement égale à 0,35 Hz.

7. Dispositif selon l'une des revendications 4 à 6, **caractérisé** en ce que le rouleau de lavage (4) est monté avec son axe de rotation (D) vertical sur un support (6, 11, 14) qui est disposé à déplacement vertical sur un chariot (3) pouvant être déplacé sur des rails de roulement horizontaux (2). (Figures 1 à 3, 4, 5 à 7).

8. Dispositif selon la revendication 7, **caractérisé** en ce que le support est un chariot de levage (6), qui peut coulisser verticalement sur des guides verticaux (7) du chariot (3). (Figures 1 à 3).

9. Dispositif selon la revendication 7, **caractérisé** en ce que le support est une fourche porteuse (11), qui est reliée au chariot (3) en pouvant pivoter autour d'un axe de pivotement (S1) horizontal, disposé parallèlement à la direction de déplacement du chariot (3). (Figure 4).

10. Dispositif selon la revendication 7, **caractérisé** en ce que le support est relié à déplacement vertical au chariot (3) par l'intermédiaire de plusieurs bras (14, 14') de parallélogramme articulé. (Figures 5 à 7).

11. Dispositif selon l'une des revendications 7 à 10, **caractérisé** en ce que le dispositif d'entraînement pour le support est formé par le servo-entraînement (15, 16) du chariot (3), l'arbre d'entraînement (18) du servo-entraînement (15, 16) étant relié à une roue de roulement (20) du chariot (3) par l'intermédiaire d'un mécanisme à roue libre (19) dans une direction de rotation (A), et portant une came de commande (21) qui agit dans les deux directions de rotation sur un (14') des bras de parallélogramme articulé. (Figures 6, 7).

12. Dispositif selon l'une des revendications 4 à 6, **caractérisé** en ce qu'au moins un rouleau de lavage (4) à axe de rotation (D) vertical est monté sur un chariot (3) qui peut être déplacé sur des rails de roulement horizontaux (2), et en ce que les rails de roulement (2) sont disposés sur un support (22 ; 22') de rails de roulement à déplacement vertical, pouvant être monté et descendu par le ou les dispositifs d'entraînement (25, 26 ; 29). (Figures 8, 9 ; 10).

13. Dispositif selon la revendication 12, **caractérisé** en ce que le support (22) de rails de roulement peut être monté et descendu sur des guides verticaux (23) d'un portique (1). (Figures 8, 9).

14. Dispositif selon la revendication 12, **caractérisé** en ce que le support (22') de rails de roulement est monté à basculement autour d'un axe de pivotement (28) horizontal, disposé dans sa région centrale transversalement à sa direction longitudinale, et on ce qu'un chariot (3) respectif est prévu de part et d'autre de l'axe de pivotement. (Figure 10).

15. Dispositif selon l'une des revendications 4 à 6, **caractérisé** on ce que le rouleau de lavage (4) est relié à son ensemble d'entraînement en solidarité de rotation et à coulissement axial. (Figures 11, 14).

16. Dispositif selon la revendication 15, **caractérisé** en ce que le rouleau de lavage (4) présente un tube porteur central (30), qui est monté en solidarité de rotation et à coulissement axial sur un arbre d'entraînement (31) relié en solidarité de rotation à l'ensemble d'entraînement (5).

17. Dispositif selon la revendication 16, **caractérisé** en ce qu'un tambour rainuré (32) est disposé à une extrémité du tube porteur (30), tambour qui est pourvu d'une rainure de commande (33) s'étendant de façon ondulée en direction circonférentielle, dans laquelle une languette, ou un galet (36) relié par l'intermédiaire d'une tige porteuse (37) à une partie immobile (9) de l'ensemble d'entraînement (5), s'engage de telle sorte que, par la rotation de l'arbre d'entraînement (31), la tambour rainure (32) et le tube porteur (30) qui lui est relié, sont déplacés en un mouvement axial de va-et-vient. (Figure 12).

18. Dispositif selon le revendication 16, **caractérisé** en ce qu'une douille (40) est disposée à une extrémité du tube porteur (30), douille qui est pourvue d'une rainure de commande entourante (41) dans laquelle s'engage une languette ou un galet (42) disposé à l'extrémité libre d'un bras de commande pivotant (43), et en ce qu'un moteur d'entraînement (48) est prévu pour le pivotement en va-et-vient du bras de commande.
